# FASCICULE DE BREVET EUROPEEN

(11) **EP 2 164 941 B1**
(45) Date de publication et mention de la délivrance du brevet: **30.03.2016**
(21) Numéro de dépôt: 08751003.8
(22) Date de dépôt: 20.05.2008
(51) Int. Cl.: C11D 3/37, C11D 3/50, B01J 13/00

(54) **PROCEDE POUR FORMULER DES PRINCIPES ACTIFS ODORANTS AFIN DE LES PROTEGER ET D'AUGMENTER LEUR REMANENCE**
VERFAHREN ZUR FORMULIERUNG VON GERUCHSBILDENDEN WIRKSTOFFEN ZU DEREN SCHUTZ UND ZUR ERHÖHUNG VON IHRER BESTÄNDIGKEIT
METHOD FOR FORMULATING ODORIFEROUS ACTIVE INGREDIENTS IN ORDER TO PROTECT SAME AND TO INCREASE THE PERSISTENCE THEREOF

(30) Priorité: 01.06.2007 FR 0703890
(43) Date de publication de la demande: 24.03.2010
(73) Titulaire: COATEX S.A.S., 69730 Genay (FR)
(72) Inventeur: GUERRET, Olivier, F-69890 La Tour de Salvagny (FR); SUAU, Jean-Marc, F-69480 Lucenay (FR); KENSICHER, Yves, F-69620 Theize (FR)
(74) Mandataire: Fiorucci, Hélène
(86) Numéro de dépôt international: PCT/IB2008/001275
(87) Numéro de publication internationale: WO 2008/146119

(56) Documents cités:
- EP-A- 1 655 351
- FR-A- 2 839 658
- US-A1- 2004 110 891
- US-B1- 6 375 983
- DATABASE WPI Week 200580 Thomson Scientific, London, GB; AN 2005-773506 XP002466229 & JP 2005 298474 A (KOSE KK) 27 octobre 2005 (2005-10-27)

## Description

### Résumé de l'invention

L'invention concerne une nouvelle méthode pour formuler des principes actifs odorants de manière à les protéger lors d'une application sur la peau ou sur un autre support tel qu'un textile (dans le cas d'une lessive par exemple) ou un mur (dans le cas d'une peinture par exemple), et de façon à contrôler la libération progressive desdits principes actifs après leur application. Elle repose sur l'utilisation d'émulsions acryliques et hydrosolubles à pH supérieur à 5, contenant des groupements hydrophobes. Ces émulsions permettent de piéger par encapsulation des principes actifs odorants dans le but de favoriser leur protection vis-à-vis de l'environnement tout en ralentissant leur cinétique de libération, ce qui se traduira par une augmentation de la durée de l'efficacité du parfum (phénomène de rémanence).

### Définitions préalables

Principe actif odorant : dans le contexte de cette invention, nous désignons par cette expression toute substance ayant une activité décelable du point de vue olfactif. Pour une meilleure compréhension, on pourra utiliser dans la Demande l'expression écourtée de "principe actif', en vue de désigner le "principe actif odorant".

Parfum : ce terme désigne dans la présente Demande toute formulation contenant au moins un principe actif odorant.

HASE : acronyme anglosaxon pour Hydrophobically Alkali Swellable Emulsion. Ce terme désigne des épaississants acryliques à base d'acide (méth)acrylique, d'un ester de ces acides et d'un monomère hydrophobe.

### Problème technique et art antérieur

Les modes d'administration des parfums sont variés : toutefois, améliorer leur tenue au niveau de la formulation initiale de parfum ainsi qu'au niveau de la surface sur laquelle ils sont appliqués est une contrainte importante pour l'homme du métier. En effet, les principes actifs odorants contenus dans les formulations parfumées peuvent s'avérer chimiquement instables et vulnérables à des agressions extérieures (telles que les oxydations).

De plus, améliorer la rémanence des parfums, c'est-à-dire retarder l'évaporation des principes actifs odorants, est un enjeu important à plusieurs titres. Sur le plan toxicologique, ces molécules peuvent causer lorsqu'elles sont diffusées en grande quantité des effets néfastes sur l'être humain (le linalool peut provoquer une démarche ataxique et l'ambrette musc peut causer des dommages neurologiques). Selon un aspect économique, ces composés organiques sont volatils et la plupart du temps très onéreux. D'un point de vue marketing, le consommateur va rechercher un effet prolongé de l'odeur développée par le parfum qu'il achète. Enfin, techniquement parlant, il est important de disposer d'un moyen permettant de protéger et de libérer progressivement un grand nombre de structures chimiques différentes, puisqu'un parfum peut contenir plus de 100 principes actifs odorants.

Enfin, il est important de protéger un principe actif tout en augmentant sa rémanence et ce, à la fois dans une formulation parfumée liquide (tel qu'une eau de toilette) que dans une formulation parfumée sous forme solide (cas du film de peinture parfumée qui laisse diffuser progressivement une odeur). Par conséquent, le problème technique visé par la présente Demande peut être résumé à travers la possibilité de fournir un principe actif odorant, protégé des agressions extérieures, dont la rémanence est améliorée, tant sous forme solide que liquide.

On a cherché depuis de nombreuses années à encapsuler des principes actifs odorants, de manière à les protéger tout en améliorant leur rémanence. On connaît à ce jour 3 techniques d'encapsulation : la mise en oeuvre des β-cyclodextrines, l'utilisation d'émulsions silicones et l'encapsulation à partir de polymères organiques.

La première catégorie met en oeuvre les β-cyclodextrines qui sont des molécules "hôtes" naturelles obtenues par dégradation enzymatique de l'amidon. Elles se présentent sous forme d'oligomères cycliques du glucose et sont caractérisées par la présence d'une cavité qui leur permet "d'accueillir une molécule hôte", de manière à former un complexe d'inclusion : selon ce mécanisme, elles peuvent encapsuler des principes actifs odorants, tel que décrit notamment dans le document EP 0 392 606. Toutefois, les complexes à base de β-cyclodextrines et d'un principe actif doivent subir une étape supplémentaire d'enrobage à partir d'un matériau protecteur (cires ou alcools gras), de manière à constituer une paroi qui permettra la libération progressive du principe actif. De plus, la stabilité du complexe d'inclusion formé dépend avant tout de l'affinité de la cyclodextrine avec le principe à encapsuler : de nombreux principes actifs ne peuvent pas être encapsulés par des β-cyclodextrines.

Une deuxième méthode consiste à encapsuler un principe actif odorant au moyen d'émulsions silicones dans de l'eau, tel que décrit dans le document US 5 130 171. La perméabilité élevée des silicones vis-à-vis des gaz leur permet de libérer lentement les molécules de principes actifs. Cependant, une telle méthode repose sur la solubilité ou la compatibilité du principe actif à encapsuler avec l'émulsion silicone utilisée, ce qui ne permet donc pas d'encapsuler tous les principes actifs odorants.

Enfin, il existe une troisième catégorie de procédés d'encapsulation basés sur la mise en oeuvre de polymères organiques. Parmi eux, on distingue les méthodes de coacervation : elles reposent sur l'enrobage d'une émulsion de principes actifs par un film polymère précipité à partir d'une solution colloïdale de ce polymère, ladite solution ayant été déstabilisée. Ce précipité appelé coacervat va s'adsorber sur les gouttelettes de l'émulsion de principes actifs à enrober. Ainsi, le document FR 2 727 632 décrit-il des microcapsules à enveloppe molle, obtenues par coacervation de gélatine et d'un copolymère de type gomme arabique, dans un gel fluide ou solide et dont le contenu est un mélange aromatisant préparé à des fins de parfumage. Parallèlement, le document US 5 126 061 décrit des microcapsules de parfum préparées par coacervation entre de la gélatine et un autre matériau polyanionique.

Cependant, les procédés de coacervation nécessitent la réalisation au préalable d'une émulsion des principes actifs à encapsuler, ce qui constitue une étape en plus de celle de coacervation. De plus, cette technique ne permet pas l'encapsulation de principes actifs hydrosolubles, puisqu'on ne peut pas réaliser leur mise en émulsion. En outre, cette méthode repose sur la compatibilité des principes actifs avec les polymères utilisés pour la coacervation.

Une autre méthode d'encapsulation basée sur la mise en oeuvre de polymères est la polycondensation. Cette méthode repose sur la polycondensation de 2 monomères, l'un étant compatible avec le milieu d'encapsulation, l'autre étant compatible avec la substance à encapsuler. Ainsi, le document WO 2007 / 004166 décrit-il des capsules polyuréthannes contenant un principe actif, lesdites capsules étant obtenues par réaction entre un composé polyisocyanate et un sel de guanidine avec des diols. Ce procédé est cependant limité aux principes actifs qui ne réagissent pas chimiquement avec les isocyanates : on ne peut donc pas encapsuler des alcools, des amines ou des acides.

Une autre méthode d'encapsulation à base de polymères est la méthode de formation d'un film en présence de tensio-actifs. Cette méthode est basée sur le choix d'un polymère compatible avec le principe actif à encapsuler. On réalise en milieu aqueux une émulsion dudit polymère en présence du principe actif à encapsuler et de tensio-actifs. A cette fin, le document US 4 803 195 décrit la mise en oeuvre de polymères cellulosiques ou d'alcool polyvinylique, alors que le document WO 2005 / 032503 fait état de polymères acryliques. Ces procédés présentent l'inconvénient de mettre en oeuvre des composés supplémentaires qui sont des tensio-actifs.

JP-A-2005298474 divulgue une composition contentant du parfum. EP 1 655 351 A2 décrit des formulations aqueuses contenant des polymères du type HASE.

Aussi, en vue de résoudre le problème d'encapsuler un principe actif odorant, de manière à le protéger efficacement, à améliorer sa rémanence, à permettre l'obtention d'une formulation liquide ou solide, et en évitant les problèmes inhérents aux solutions proposées par l'art antérieur, la Demanderesse a mis au point un procédé de fabrication original caractérisé en ce qu'il comprend les étapes de :
a) mélanger au moins une émulsion de type HASE, au moins un principe actif odorant et de l'eau, ledit mélange ayant un pH supérieur à 5, préférentiellement 6, très préférentiellement 7,
b) précipiter le mélange obtenu après l'étape a) par ajustement du pH à une valeur inférieure à 5, préférentiellement 3, en vue d'obtenir une dispersion dans l'eau de particules solides,
c) éventuellement isoler les particules solides obtenues après l'étape b) par élimination de l'eau.

Une des originalités du procédé selon l'invention est d'utiliser des émulsions de type HASE, qui disposent d'un monomère hydrophobe associatif. Ce monomère possède la propriété, lorsque l'émulsion est neutralisée à pH suffisamment élevé (> 5), de créer des interactions associatives qui renforcent l'effet épaississant par rapport à un polymère ne disposant pas de tels monomères. Ces interactions associatives entre les groupements hydrophobes délimitent des domaines qui sont autant de cages de solvatation pour un principe actif. Un des mérites de la Demanderesse est d'avoir su identifier et utiliser le phénomène de structuration de l'eau via une émulsion de type HASE, à pH supérieur à 5 : on protège ainsi naturellement les principes actifs dissous dans cette solution.

Une telle mise en oeuvre des émulsions de type HASE est dans l'état de nos connaissances actuelles une utilisation nouvelle de ces objets largement décrits dans des applications pour la peinture (voir les documents FR 2 693 203, FR 2 872 815, FR 2 633 930), ou encore le secteur des bétons (voir la demande de brevet française non encore publiée et portant le numéro de dépôt FR 07 00086). En outre, ces domaines techniques sont très éloignés de celui relatif à la présente invention, et les documents précités ne divulguent ni n'enseignent rien qui aurait pu orienter l'homme du métier vers la présente invention.

Par conséquent, après avoir réalisé l'étape a) du procédé selon l'invention, on obtient un mélange dans lequel les molécules de principe actif sont piégées dans des cages de solvatation. Même après application et séchage de la formulation résultante sur un support (peau, tissu, mur, etc...), les principes actifs demeurent piégés au sein du film polymère qui s'est formé pendant le séchage : on ralentit ainsi la vitesse d'évaporation du principe actif, par diffusion à travers le film.

Dans une première variante du procédé de l'invention, on peut aussi mettre en oeuvre une étape b) d'acidification du mélange obtenu après l'étape a). Cette diminution du pH provoque l'effondrement de la structure polymère : on obtient alors une dispersion dans l'eau de particules solides constituées du polymère et des principes actifs. Les principes actifs restent piégés : ils demeurent protégés et leur vitesse d'évaporation est réduite.

Dans une deuxième variante, on peut mettre en oeuvre à la fois l'étape b) mais aussi une étape consécutive c), qui consiste en l'isolation des particules solides obtenues après l'étape b), par élimination de l'eau. Comme dans le cas précédent, les principes actifs sont isolés et donc protégés tout en s'évaporant plus lentement.

Aussi, un autre avantage du procédé selon la présente invention est de délivrer un principe actif odorant sous une forme qui le protège et ralentit sa libération, cette forme pouvant être triple :
- celle d'un liquide qui est une solution aqueuse, lorsque le produit est préparé en ne réalisant que l'étape de mélange du procédé selon l'invention à un pH supérieur à 5,
- celle d'un liquide qui est une dispersion dans l'eau de particules solides, lorsque la préparation du produit met aussi en oeuvre l'étape de précipitation à un pH inférieur à 5,
- celle d'un solide constitué des particules solides du principe actif qui a été piégé dans les particules de polymères, lorsqu'on a mis en oeuvre l'étape d'isolation du procédé selon l'invention.

La Demanderesse indique que l'unité d'invention est assurée notamment entre ces 3 formes de réalisation de l'invention de part la mise en oeuvre dans chacune de ces formes de la combinaison :
- d'au moins un copolymère de l'acide (méth)acrylique, d'un monomère ester de ces acides, et d'un monomère hydrophobe,
- et d'au moins un principe actif odorant.

Enfin, un autre avantage de l'invention est qu'elle peut être mise en oeuvre pour piéger un très grand nombre de principes actifs odorants. En effet, l'homme du métier a accès à une très vaste bibliothèque de monomères associatifs dans laquelle il peut puiser en vue d'identifier le monomère qui présentera la meilleure affinité possible vis-à-vis du principe actif à piéger.

### Description de l'invention :

Un premier objet de l'invention est un procédé de fabrication d'une formulation contenant au moins un principe actif odorant, et caractérisé en ce qu'il comprend les étapes de :
a) mélanger au moins une émulsion de type HASE, au moins un principe actif odorant et de l'eau, ledit mélange ayant un pH supérieur à 5, préférentiellement 6, très préférentiellement 7,
b) précipiter le mélange obtenu après l'étape a) par ajustement du pH à une valeur inférieure à 5, préférentiellement 3, en vue d'obtenir une dispersion dans l'eau de particules solides,
c) éventuellement isoler les particules solides obtenues après l'étape b) par élimination de l'eau.

Première variante, le procédé selon l'invention met en oeuvre l'étape a) puis l'étape b).

Dans une deuxième variante, le procédé selon l'invention met en oeuvre l'étape a) puis l'étape b) puis l'étape c).

Le procédé selon l'invention est aussi caractérisé en ce que le pH du mélange, au cours de l'étape a), est ajusté au moyen d'une base organique ou minérale. Pratiquement, les constituants (principe actif, eau, émulsion de type HASE, ainsi que la base minérale ou organique) sont introduits sous agitation dans un réacteur ; l'ordre d'introduction sera choisi par l'homme du métier, notamment en fonction de la solubilité dans l'eau du principe actif à encapsuler.

Le procédé selon l'invention est aussi caractérisé en ce qu'on met en oeuvre, dans l'étape a), de 0,1 % à 20 %, préférentiellement de 0,1 % à 10 %, très préférentiellement de 0,1 % à 5 % en poids sec d'une émulsion de type HASE, par rapport au poids total de la formulation aqueuse obtenue après l'étape a).

Le procédé selon l'invention est aussi caractérisé en ce qu'on met en oeuvre, dans l'étape a), de 0,1 % à 20 % en poids sec d'un principe actif odorant qui est hydrophile ou hydrophobe, par rapport au poids total de la formulation aqueuse obtenue après l'étape a).

Le procédé selon l'invention est aussi caractérisé en ce qu'on met en oeuvre un acide moyennement fort ou fort au cours de l'étape b).

Le procédé selon l'invention est aussi caractérisé en ce que l'émulsion de type HASE contient au moins un copolymère de l'acide (méth)acrylique, d'un monomère non hydrosoluble qui est préférentiellement un ester (méth)acrylique choisi très préférentiellement parmi l'acrylate d'éthyle, l'acrylate de butyle, le méthacrylate de méthyle et leurs mélanges, et d'un monomère contenant au moins un groupement hydrophobe.

Le procédé selon l'invention est aussi caractérisé en ce que ledit monomère contenant au moins un groupement hydrophobe possède la formule générale : 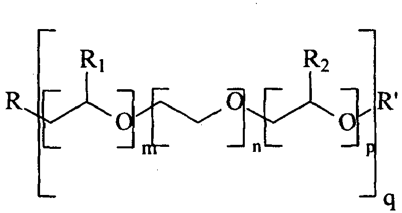 où :
- m, n, p et q sont des entiers et m, n, p sont inférieurs à 150,
- R comporte une fonction vinylique polymérisable,
- R₁ et R₂ sont identiques ou différents et représentent des atomes d'hydrogène ou des groupements alkyls,
- R' est un groupement hydrophobe comportant au moins 6, préférentiellement au moins 10, très préférentiellement au moins 12 atomes de carbone.

Le procédé selon l'invention est enfin caractérisé en ce que l'eau est éliminée par évaporation ou centrifugation au cours de l'étape c). Toutefois, l'homme du métier pourra mettre en oeuvre toute autre technique visant à éliminer l'eau du mélange obtenu après l'étape b).

Un autre objet de l'invention consiste en la formulation constituée de particules solides en dispersion dans l'eau, et obtenue par mise en oeuvre de l'étape de précipitation b) du procédé auparavant décrit.

Cette dispersion de particules solides dans l'eau est caractérisée en ce que les particules solides qui la constituent, contiennent au moins un principe actif odorant et au moins un copolymère de l'acide (méth)acrylique, d'un monomère non hydrosoluble qui est préférentiellement un ester (méth)acrylique choisi très préférentiellement parmi l'acrylate d'éthyle, l'acrylate de butyle, le méthacrylate de méthyle et leurs mélanges, et d'un monomère contenant au moins un groupement hydrophobe.

Cette dispersion de particules solides dans l'eau est aussi caractérisée en ce que ledit monomère contenant au moins un groupement hydrophobe possède la formule générale : 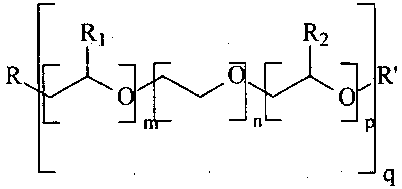 où :
- m, n, p et q sont des entiers et m, n, p sont inférieurs à 150,
- R comporte une fonction vinylique polymérisable,
- R₁ et R₂ sont identiques ou différents et représentent des atomes d'hydrogène ou des groupements alkyls,
- R' est un groupement hydrophobe comportant au moins 6, préférentiellement au moins 10, très préférentiellement au moins 12 atomes de carbone.

Un autre objet de l'invention réside dans la formulation constituée des particules solides obtenues par mise en oeuvre de l'étape d'isolation c) du procédé auparavant décrit.

Ces particules solides sont caractérisées en ce qu'elles contiennent au moins un principe actif odorant et au moins un copolymère de l'acide (méth)acrylique, d'un monomère non hydrosoluble qui est préférentiellement un ester (méth)acrylique choisi très préférentiellement parmi l'acrylate d'éthyle, l'acrylate de butyle, le méthacrylate de méthyle et leurs mélanges, et d'un monomère contenant au moins un groupement hydrophobe.

Ces particules solides sont aussi caractérisées en ce que ledit monomère contenant au moins un groupement hydrophobe possède la formule générale : 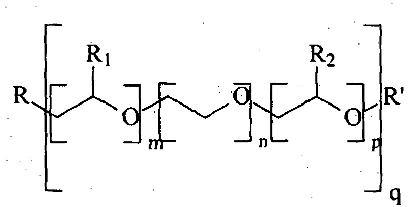 où :
- m, n, p et q sont des entiers et m, n, p sont inférieurs à 150,
- R comporte une fonction vinylique polymérisable,
- R₁ et R₂ sont identiques ou différents et représentent des atomes d'hydrogène ou des groupements alkyls,
- R' est un groupement hydrophobe comportant au moins 6, préférentiellement au moins 10, très préférentiellement au moins 12 atomes de carbone.

Un dernier objet de l'invention est l'utilisation des formulations aqueuses d'au moins un principe actif odorant, des dispersions aqueuses de particules solides d'au moins un principe actif odorant et des particules solides d'au moins un principe actif odorant, comme agent ayant la double fonction de protéger un principe actif odorant et de ralentir son évaporation.

### EXEMPLES

### Exemple 1

Cet exemple illustre le procédé de l'invention, dans lequel on réalise selon l'étape a) une formulation aqueuse d'un principe actif odorant et d'une émulsion de type HASE à un pH supérieur à 5.

Il illustre également la mise en oeuvre de l'étape b) du procédé de l'invention qui consiste à diminuer le pH à une valeur inférieure à 5.

Il illustre également la mise en oeuvre de l'étape c) de l'invention qui conduit à isoler les particules solides de principe actif encapsulé.

Cet exemple illustre donc aussi les 3 modes de réalisation de la formulation selon l'invention : une solution obtenue après l'étape a), une dispersion de particules solides dans l'eau obtenue après l'étape b), et des particules solides et sèches obtenues après l'étape c).

### Réalisation de l'étape a).

Dans le cas des essais n° 1 à 5 qui sont des témoins, on introduit dans l'eau une certaine masse de principe actif odorant, la masse d'eau mise en oeuvre étant telle que la formulation réalisée pèse 100 grammes. Les principes actifs testés sont le menthol, le chèvrefeuille et l'huile de cananga.

Dans le cas des essais n° 1 bis à 5 bis qui illustrent l'invention, on introduit dans de l'eau la même masse de principe actif que respectivement pour les essais n° 1 à 5. De plus, on introduit une certaine quantité de polymère qui est une émulsion de type HASE commercialisée par la société COATEXT™ sous le nom de Rheo™ 2000, ainsi que de la soude (solution à 50 %) de manière à obtenir un pH égal à 5,5.

Pour chacun des essais n° 1 à 5, et 1 bis à 5 bis, la composition des différentes formulations (en grammes) est indiquée dans le tableau 1.

**Tableau 1**

| essai n° | polymère | principe actif | masse polymère | masse eau | masse principe actif | masse soude |
|---|---|---|---|---|---|---|
| 1 | - | menthol | 0 | 99,925 | 0,075 | 0 |
| 1 bis | Rheo™ 2000 | menthol | 3,33 | 96,27 | 0,075 | 0,325 |
| 2 | - | menthol | 0 | 99,925 | 0,075 | 0 |
| 2 bis | Rheo™ 2000 | menthol | 13,26 | 86,34 | 0,075 | 0,325 |
| 3 | - | chèvrefeuille | 0 | 98,3 | 1,7 | 0 |
| 3 bis | Rheo™ 2000 | chèvrefeuille | 16,67 | 81,13 | 1,7 | 0,50 |
| 4 | - | chèvrefeuille | 0 | 99,9 | 0,1 | 0 |
| 4 bis | Rheo™ 2000 | chèvrefeuille | 3,33 | 96,27 | 0,1 | 0,30 |
| 5 | - | Huile de cananga | 0 | 99,9 | 0,1 | 0 |
| 5 bis | Rheo™ 2000 | Huile de cananga | 3,33 | 96,27 | 0,1 | 0,30 |

Toutes les formulations réalisées selon les essais n° 1 à 4 présentent des gouttelettes, parfaitement visibles à l'oeil nu : le principe actif est en dispersion dans l'eau.

En revanche, pour chacun des essais n° 1 bis à 4 bis, on observe des solutions limpides : les molécules de principe actif odorant sont solvatées par le polymère et sont parfaitement dispersées dans la phase continue.

### Réalisation de l'étape b).

Pour chacun des essais n° 1 ter à 5 ter, on diminue le pH de chaque solution correspondant respectivement aux essais n° 1 bis à 5 bis, à une valeur égale à 2,5, par ajout d'acide phosphorique.

Cette diminution du pH provoque l'effondrement de la structure polymère : on obtient alors une dispersion dans l'eau de particules solides constituées du polymère et des principes actifs.

A partir d'une méthode de mesure basée sur la diffusion de la lumière, bien connue de l'homme du métier, on détermine la taille de ces particules solides.

Leur diamètre est égal à :
- 280 nm dans le cas des essais n° 1 ter et 2 ter ;
- 1 000 nm dans le cas des essais n° 3 ter et 4 ter ;
- 700 nm dans le cas de l'essai 5 ter.

### Réalisation de l'étape c).

Chaque dispersion résultant des essais n° 1 ter à 5 ter est placée dans une étuve à une température de 110°C, pendant une durée telle que 99,5 % en poids de l'eau initiale est évaporée.

On obtient alors des particules solides qui renferment les principes actifs odorants testés, et dont on vérifie qu'elles ne laissent diffuser aucune odeur détectable au niveau de l'odorat.

### Exemple 2

Cet exemple illustre le procédé de l'invention, dans lequel on réalise selon l'étape a) une formulation aqueuse d'un principe actif odorant et d'une émulsion de type HASE à un pH supérieur à 5.

Il illustre également la mise en oeuvre de l'étape b) du procédé de l'invention qui consiste à diminuer le pH à une valeur inférieure à 5.

Cet exemple illustre donc aussi les 2 modes de réalisation de la formulation selon l'invention : une solution obtenue après l'étape a), une dispersion de particules solides dans l'eau obtenue après l'étape b).

### Réalisation de l'étape a).

Dans le cas des essais n° 6 à 8 qui sont des témoins, on introduit dans l'eau une certaine masse de principe actif odorant, la masse d'eau mise en oeuvre étant de 100 grammes. Le principe actif testé est le citronellal.

Dans le cas des essais n° 6 bis à 8 bis qui illustrent l'invention, on introduit dans de l'eau la même masse de principe actif que respectivement pour les essais n° 6 à 8. De plus, on introduit une certaine quantité de polymère qui est une émulsion de type HASE commercialisée par la société COATEX™ sous le nom de Rheotech™ 3800, ainsi que de la soude (solution à 50 %) de manière à obtenir un pH égal à 6.

Pour chacun des essais n° 6 à 8, et 6 bis à 8 bis, la composition des différentes formulations (en grammes) est indiquée dans le tableau 2.

**Tableau 2**

| essai n° | polymère | principe actif | masse polymère | masse eau | masse principe actif |
|---|---|---|---|---|---|
| 6 | - | citronellal | 0 | 99,925 | 27,74 |
| 7 | - | citronellal | 0 | 100 | 17,46 |
| 8 | - | citronellal | 0 | 100 | 8,3 |
| 6 bis | Rheotech™ 3800 | citronellal | 22 | 100 | 27,74 |
| 7 bis | Rheotech™ 3800 | citronellal | 22 | 100 | 17,46 |
| 8 bis | Rheotech™ 3800 | citronellal | 22 | 100 | 8,3 |

Toutes les formulations réalisées selon les essais n° 6 à 8 présentent des gouttelettes, parfaitement visibles à l'oeil nu : le principe actif est en dispersion dans l'eau.

En revanche, pour chacun des essais n° 6 bis à 8 bis, on observe des gels : les molécules de principe actif odorant sont solvatées par le polymère et sont dispersées dans la phase continue.

### Réalisation de l'étape b).

Pour chacun des essais n° 6 bis à 8 bis, on diminue le pH de chaque solution correspondant respectivement aux essais n° 1 bis à 3 bis, à une valeur égale à 4,8, par ajout d'acide phosphorique.

Cette diminution du pH provoque l'effondrement de la structure polymère : on obtient alors une dispersion dans l'eau de particules solides constituées du polymère et des principes actifs.

A partir d'une méthode de mesure basée sur la diffusion de la lumière, bien connue de l'homme du métier, on détermine la taille de ces particules solides.

Leur diamètre est égal à :
- 1800 nm pour le 6 bis, 650 nm pour le 7 bis et 520 nm pour le 8 bis.

### Exemple 3

Cet exemple illustre le procédé de l'invention, dans lequel on réalise selon l'étape a) une formulation aqueuse d'un principe actif odorant et d'une émulsion de type HASE à un pH supérieur à 5.

Il illustre également la mise en oeuvre de l'étape b) du procédé de l'invention qui consiste à diminuer le pH à une valeur inférieure à 5.

Il illustre également la mise en oeuvre de l'étape c) de l'invention qui conduit à isoler les particules solides de principe actif encapsulé.

Cet exemple illustre donc aussi les 3 modes de réalisation de la formulation selon l'invention : une solution obtenue après l'étape a), une dispersion de particules solides dans l'eau obtenue après l'étape b), et des particules solides et sèches obtenues après l'étape c).

### Réalisation de l'étape a).

Dans le cas de l'essai n° 9 qui est un témoin, on introduit dans l'eau une certaine masse de principe actif odorant, la masse d'eau mise en oeuvre étant de 100 grammes. Le principe actif testé est l'aurantiol.

Pour l'essai 9 bis qui illustre l'invention, on introduit dans de l'eau la même masse de principe actif que pour l'essai n° 9. De plus, on introduit une certaine quantité de polymère qui est une émulsion de type HASE commercialisée par la société COATEXT™ sous le nom de Rheotech™ 3800, ainsi que de la soude (solution à 50 %) de manière à obtenir un pH égal à 5,5.

Pour chacun des essais n° 9 et 9 bis, la composition des différentes formulations (en grammes) est indiquée dans le tableau 3.

**Tableau 3**

| essai n° | polymère | principe actif | masse polymère | masse eau | masse principe actif | masse soude |
|---|---|---|---|---|---|---|
| 9 | - | aurantiol | 0 | 30 | 0,3 | 0 |
| 9 bis | Rheotech™ 3800 | aurantiol | 22 | 30 | 0,3 | 0,64 |

Dans le cas de l'essai 9, l'aurantiol se présente sous la forme de gouttelettes non missibles avec l'eau. En revanche, pour l'essai n° 9 bis, on observe un gel : les molécules de principe actif odorant sont solvatées par le polymère et sont dispersées dans la phase continue.

### Réalisation de l'étape b).

On diminue le pH de la solution correspondant à l'essai n° 9 bis, à une valeur égale à 2,45, par ajout d'acide phosphorique.

Cette diminution du pH provoque l'effondrement de la structure polymère : on obtient alors une dispersion dans l'eau de particules solides constituées du polymère et des principes actifs.

A partir d'une méthode de mesure basée sur la diffusion de la lumière, bien connue de l'homme du métier, on détermine la taille de ces particules solides.

Leur diamètre est égal à environ 1900 nm.

### Réalisation de l'étape c).

La dispersion est placée dans une étuve sous vide à une température de 45°C, pendant une durée telle que 99,5 % en poids de l'eau initiale est évaporée.

On obtient alors des particules solides qui renferment les principes actifs odorants testés.

## Revendications

1. Procédé de fabrication d'une formulation contenant au moins un principe actif odorant, comprenant les étapes consistant à :
a) mélanger au moins une émulsion de type HASE, au moins un principe actif odorant et de l'eau, ledit mélange ayant un pH supérieur à 5, préférentiellement 6, très préférentiellement 7,
b) précipiter le mélange obtenu après l'étape a) par ajustement du pH à une valeur inférieure à 5, préférentiellement 3, en vue d'obtenir une dispersion dans l'eau de particules solides,
c) éventuellement isoler les particules solides obtenues après l'étape b) par élimination de l'eau.

2. Procédé selon la revendication 1, selon lequel on met en oeuvre l'étape a) puis l'étape b) puis l'étape c).

3. Procédé selon l'une des revendications 1 ou 2, selon lequel le pH du mélange, au cours de l'étape a), est ajusté au moyen d'une base organique ou minérale, et où les constituants (principe actif, eau, émulsion de type HASE, ainsi que là base minérale ou organique) sont introduits sous agitation dans un réacteur selon un ordre d'introduction choisi notamment en fonction de la solubilité dans l'eau du principe actif à encapsuler.

4. Procédé selon l'une des revendications 1 à 3, selon lequel on met en oeuvre, dans l'étape a), de 0,1 % à 20 %, préférentiellement de 0,1 % à 10 %, très préférentiellement de 0,1 % à 5 % en poids sec d'une émulsion de type HASE, par rapport au poids total de la formulation aqueuse obtenue après l'étape a).

5. Procédé selon l'une des revendications 1 à 4, selon lequel on met en oeuvre, dans l'étape a), de 0,1 % à 20 % en poids sec d'un principe actif odorant qui est hydrophile ou hydrophobe, par rapport au poids total de la formulation aqueuse obtenue après l'étape a).

6. Procédé selon l'une des revendications 1 à 5, selon lequel on met en oeuvre un acide moyennement fort ou fort au cours de l'étape b).

7. Procédé selon l'une des revendications 1 à 6, selon lequel l'émulsion de type HASE contient au moins un copolymère :
- de l'acide (méth)acrylique,
- d'un monomère non hydrosoluble qui est préférentiellement un ester (méth)acrylique choisi très préférentiellement parmi l'acrylate d'éthyle, l'acrylate de butyle, le méthacrylate de méthyle et leurs mélanges, et
- d'un monomère contenant au moins un groupement hydrophobe.

8. Procédé selon la revendication 7, selon lequel ledit monomère contenant au moins un groupement hydrophobe possède la formule générale : 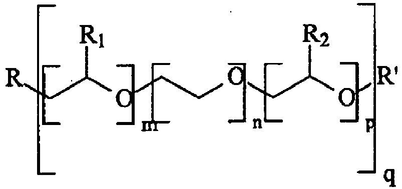 où:
- m, n, p et q sont des entiers et m, n, p sont inférieurs à 150,
- R comporte une fonction vinylique polymérisable,
- R₁ et R₂ sont identiques ou différents et représentent des atomes d'hydrogène ou des groupements alkyls,
- R' est un groupement hydrophobe comportant au moins 6, préférentiellement au moins 10, très préférentiellement au moins 12 atomes de carbone.

9. Procédé selon l'une des revendications 1 à 8, selon lequel l'eau est éliminée par évaporation ou centrifugation au cours de l'étape c).

10. Dispersion de particules solides dans l'eau, selon laquelle lesdites particules solides contiennent au moins un principe actif odorant et au moins un copolymère de l'acide (méth)acrylique, d'un monomère non hydrosoluble qui est préférentiellement un ester (méth)acrylique choisi très préférentiellement parmi l'acrylate d'éthyle, l'acrylate de butyle, le méthacrylate de méthyle et leurs mélanges, et d'un monomère contenant au moins un groupement hydrophobe.

11. Dispersion selon la revendication 10, selon laquelle ledit monomère contenant au moins un groupement hydrophobe possède la formule générale : 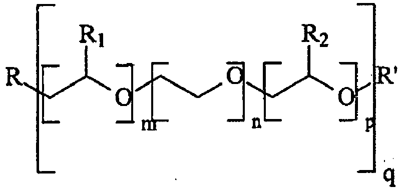 où :
- m, n, p et q sont des entiers et m, n, p sont inférieurs à 150,
- R comporte une fonction vinylique polymérisable,
- R₁ et R₂ sont identiques ou différents et représentent des atomes d'hydrogène ou des groupements alkyls,
- R' est un groupement hydrophobe comportant au moins 6, préférentiellement au moins 10, très préférentiellement au moins 12 atomes de carbone.

12. Particules solides **caractérisées en ce qu'**elles contiennent au moins un principe actif odorant et au moins un copolymère de l'acide (méth)acrylique, d'un monomère non hydrosoluble qui est préférentiellement un ester (méth)acrylique choisi très préférentiellement parmi l'acrylate d'éthyle, l'acrylate de butyle, le méthacrylate de méthyle et leurs mélanges, et d'un monomère contenant au moins un groupement hydrophobe.

13. Particules selon la revendication 12, selon lesquelles ledit monomère contenant au moins un groupement hydrophobe possède la formule générale : 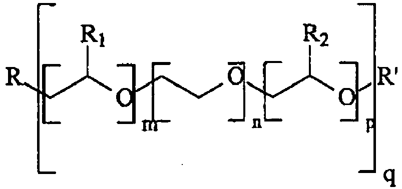 où :
- m, n, p et q sont des entiers et m, n, p sont inférieurs à 150,
- R comporte une fonction vinylique polymérisable,
- R₁ et R₂ sont identiques ou différents et représentent des atomes d'hydrogène ou des groupements alkyls,
- R' est un groupement hydrophobe comportant au moins 6, préférentiellement au moins 10, très préférentiellement au moins 12 atomes de carbone.

14. Utilisation des dispersions aqueuses de particules solides d'au moins un principe actif odorant selon l'une des revendications 10-11 ou des particules solides d'au moins un principe actif odorant selon l'une des revendications 12-13, comme agent ayant la double fonction de protéger un principe actif odorant et de ralentir son évaporation.

## Patentansprüche

1. Verfahren zur Herstellung einer Formulierung, die mindestens einen Duftwirkstoff enthält, das folgende Schritte umfasst:
a) Mischen von mindestens einer Emulsion vom HASE-Typ, mindestens einem Duftwirkstoff und Wasser, wobei die Mischung einen pH-Wert von mehr als 5, vorzugsweise 6, besonders bevorzugt 7, aufweist,
b) Fällen der nach Schritt a) erhaltenen Mischung durch Einstellung des pH-Werts auf einen Wert von weniger als 5, vorzugsweise 3, zum Erhalt einer Dispersion von festen Teilchen in Wasser,
c) gegebenenfalls Isolieren der nach Schritt b) erhaltenen festen Teilchen durch Entfernung des Wassers.

2. Verfahren nach Anspruch 1, gemäß dem man Schritt a), dann Schritt b) und dann Schritt c) durchführt,

3. Verfahren nach Anspruch 1 oder 2, gemäß dem der pH-Wert der Mischung im Lauf von Schritt a) mit einer organischen oder anorganischen Base eingestellt wird und wobei die Bestandteile (Wirkstoff, Wasser, Emulsion vom HASE-Typ sowie die anorganische bzw. organische Base) unter Rühren gemäß einer Eintragsreihenfolge, die insbesondere in Abhängigkeit von der Wasserlöslichkeit des zu verkapselnden Wirkstoffs gewählt wird, in einen Reaktor eingetragen werden.

4. Verfahren nach einem der Ansprüche 1 bis 3, gemäß dem man in Schritt a) 0,1 bis 20 Trockengew.-%, vorzugsweise 0,1 bis 10 Trockengew.-%, besonders bevorzugt 0,1 bis 5 Trockengew.-%, einer Emulsion vom HASE-Typ, bezogen auf das Gesamtgewicht der nach Schritt a) erhaltenen wässrigen Formulierung, verwendet.

5. Verfahren nach einem der Ansprüche 1 bis 4, gemäß dem man in Schritt a) 0,1 bis 20 Trockengew.-% eines Duftwirkstoffs, der hydrophil oder hydrophob ist, bezogen auf das Gesamtgewicht der nach Schritt a) erhaltenen wässrigen Formulierung, verwendet.

6. Verfahren nach einem der Ansprüche 1 bis 5, gemäß dem man im Lauf von Schritt b) eine mittelstarke oder starke Säure verwendet.

7. Verfahren nach einem der Ansprüche 1 bis 6, gemäß dem die Emulsion vom HASE-Typ mindestens ein Copolymer von:
- (Meth)acrylsäure,
- einem nicht wasserlöslichen Monomer, bei dem es sich vorzugsweise um einen (Meth)acrylsäureester handelt, der besonders bevorzugt aus Ethylacrylat, Butylacrylat, Methylmethacrylat und Mischungen davon ausgewählt ist, und
- einem Monomer mit mindestens einer hydrophoben Gruppe enthält.

8. Verfahren nach Anspruch 7, gemäß dem das Monomer mit mindestens einer hydrophoben Gruppe die folgende allgemeine Formel besitzt: 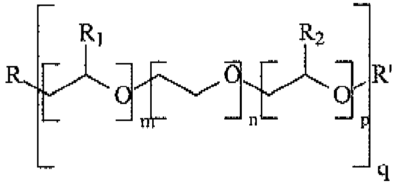 wobei:
- m, n, p und q ganze Zahlen sind und m, n, p kleiner als 150 sind,
- R eine polymerisierbare Vinylfunktion umfasst,
- R₁ und R₂ gleich oder verschieden sind und für Wasserstoffatome oder Alkylgruppen stehen,
- R' eine hydrophobe Gruppe mit mindestens 6, vorzugsweise mindestens 10, besonders bevorzugt mindestens 12, Kohlenstoffatomen ist.

9. Verfahren nach einem der Ansprüche 1 bis 8, gemäß dem das Wasser im Lauf von Schritt c) durch Verdampfung oder Zentrifugation entfernt wird.

10. Dispersion von festen Teilchen in Wasser, gemäß der die festen Teilchen mindestens einen Duftwirkstoff und mindestens ein Copolymer von (Meth)acrylsäure, einem nicht wasserlöslichen Monomer, bei dem es sich vorzugsweise um einen (Meth)acrylsäureester handelt, der besonders bevorzugt aus Ethylacrylat, Butylacrylat, Methylmethacrylat und Mischungen davon ausgewählt ist, und einem Monomer mit mindestens einer hydrophoben Gruppe enthalten.

11. Dispersion nach Anspruch 10, gemäß der das Monomer mit mindestens einer hydrophoben Gruppe die folgende allgemeine Formel besitzt: 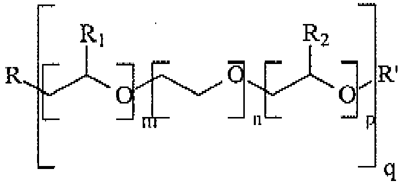 wobei:
- m, n, p und q ganze Zahlen sind und m, n, p kleiner als 150 sind,
- R eine polymerisierbare Vinylfunktion umfasst,
- R₁ und R₂ gleich oder verschieden sind und für Wasserstoffatome oder Alkylgruppen stehen,
- R' eine hydrophobe Gruppe mit mindestens 6, vorzugsweise mindestens 10, besonders bevorzugt mindestens 12, Kohlenstoffatomen ist.

12. Feste Teilchen, **dadurch gekennzeichnet, dass** sie mindestens einen Duftwirkstoff und mindestens ein Copolymer von (Meth)acrylsäure, einem nicht wasserlöslichen Monomer, bei dem es sich vorzugsweise um einen (Meth)acrylsäureester handelt, der besonders bevorzugt aus Ethylacrylat, Butylacrylat, Methylmethacrylat und Mischungen davon ausgewählt ist, und einem Monomer mit mindestens einer hydrophoben Gruppe enthalten.

13. Teilchen nach Anspruch 12, gemäß denen das Monomer mit mindestens einer hydrophoben Gruppe die folgende allgemeine Formel besitzt: 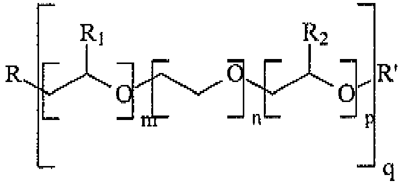 wobei:
- m, n, p und q ganze Zahlen sind und m, n, p kleiner als 150 sind,
- R eine polymerisierbare Vinylfunktion umfasst,
- R₁ und R₂ gleich oder verschieden sind und für Wasserstoffatome oder Alkylgruppen stehen,
- R' eine hydrophobe Gruppe mit mindestens 6, vorzugsweise mindestens 10, besonders bevorzugt mindestens 12, Kohlenstoffatomen ist.

14. Verwendung von wässrigen Dispersionen von festen Teilchen mindestens eines Duftwirkstoffs gemäß einem der Ansprüche 10-11 oder festen Teilchen mindestens eines Duftwirkstoffs gemäß einem der Ansprüche 12-13 als Mittel mit der Doppelfunktion, einen Duftwirkstoff zu schützen und dessen Verdampfung zu verlangsamen.

## Claims

1. Method for producing a formulation containing at least one fragrance active ingredient, comprising the steps consisting in:
a) mixing at least one HASE emulsion, at least one fragrance active ingredient, and water, said mixture having a pH greater than 5, preferentially 6, and very preferentially 7,
b) precipitating the mixture obtained after step a) by adjusting the pH to a value less than 5, preferentially 3, in order to obtain a dispersion of solid particles in water,
c) optionally isolating the solid particles obtained after step b) by eliminating the water.

2. Method according to claim 1, according to which step a) then step b) then step c) are implemented.

3. Method according to one of claims 1 or 2, according to which the mixture pH, during step a), is adjusted by means of an organic or mineral base, and in which the constituents (the active ingredient, water, HASE type emulsion, and the mineral or organic base) are added under stirring in a reactor; the order in which they are added will be chosen particularly based on the water-solubility of the active ingredient to be encapsulated.

4. Method according to one of claims 1 to 3, according to which during step a), 0.1% to 20%, preferentially 0.1% to 10%, very preferentially 0.1% to 5% by dry weight of an HASE emulsion, in relation to the total weight of the aqueous formulation obtained after step a), is implemented.

5. Method according to one of claims 1 to 4, according to which during step a), 0.1% to 20% by dry weight of a hydrophobic or hydrophilic fragrance active ingredient, in relation to the total weight of the aqueous formulation obtained after step a), is implemented.

6. Method according to one of claims 1 to 5, according to which a strong or moderately strong acid is implemented during step b).

7. Method according to one of claims 1 to 6, according to which the HASE emulsion contains at least one copolymer:
- of (meth)acrylic acid,
- of a non-hydrosoluble monomer which is preferentially a (meth)acrylic ester chosen very preferentially from among ethyl acrylate, butyl acrylate, methyl méthacrylate and mixtures thereof, and
- of a monomer containing at least one hydrophobic group.

8. Method according to claim 7, according to which the said monomer containing at least one hydrophobic group has the general formula: 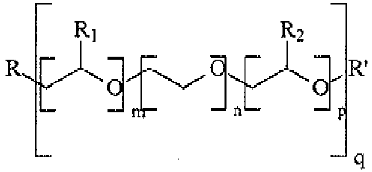 where:
- m, n, p and q are integers and m, n, p are less than 150,
- R has a polymerizable vinylic function,
- R₁ and R₂ are identical or different, and represent hydrogen atoms or alkyl groups,
- R' is a hydrophobic group comprising at least 6, preferentially at least 10, and very preferentially at least 12 carbon atoms.

9. Method according to one of claims 1 to 8, according to which the water is eliminated by evaporation or centrifugation during step c).

10. Dispersion of solid particles in water, according to which the said solid particles contain at least one fragrance active ingredient and at least one copolymer of (meth)acrylic acid, of a non-hydrosoluble monomer which is preferentially a (meth)acrylic ester very preferentially chosen from among ethyl acrylate, butyl acrylate, methyl methacrylate and mixtures thereof, and of a monomer containing at least one hydrophobic group.

11. Dispersion according to claim 10, according to which the said monomer containing at least one hydrophobic group has the general formula: 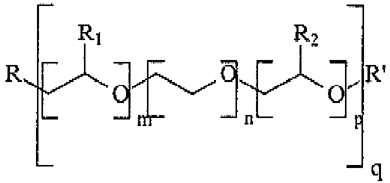 where:
- m, n, p and q are integers and m, n, p are less than 150,
- R has a polynierizable vinylic function,
- R₁ and R₂ are identical or different, and represent hydrogen atoms or alkyl groups,
- R' is a hydrophobic group comprising at least 6, preferentially at least 10, and very preferentially at least 12 carbon atoms.

12. Solid particles **characterized in that** they contain a fragrance active ingredient and at least a copolymer of (meth)acrylic acid, of a non-hydrosoluble monomer which is preferentially a (meth)acrylic ester chosen very preferentially from among ethyl acrylate, butyl acrylate, methyl methacrylate and mixtures thereof, and of a monomer containing at least one hydrophobic group.

13. Particles according to claim 12, according to which the said monomer containing at least one hydrophobic group has the general formula: 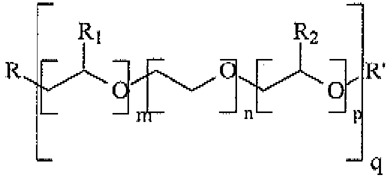 where:
- m, n, p and q are integers and m, n, p are less than 150,
- R has a polymerizable vinylic function,
- R₁ and R₂ are identical or different, and represent hydrogen atoms or alkyl groups,
- R' is a hydrophobic group comprising at least 6, preferentially at least 10, and very preferentially at least 12 carbon atoms.

14. Use of aqueous dispersions of solid particles of at least one fragrance active ingredient according to one of claims 10-11 or solid particles of at least one fragrance active ingredient according to one of claims 12-13, as an agent having the double function of protecting a fragrance active ingredient and slowing its evaporation.
